Europäisches Patentamt

European Patent Office

Office européen des brevets

(11) Veröffentlichungsnummer: **0 115 556**
**B1**

(12) **EUROPÄISCHE PATENTSCHRIFT**

(45) Veröffentlichungstag der Patentschrift:
13.08.86

(51) Int. Cl.⁴: **A 47 J 31/06**

(21) Anmeldenummer: **83101191.1**

(22) Anmeldetag: **08.02.83**

(54) **Filtergefäss mit als Saugheber wirkendem Auslauf.**

(43) Veröffentlichungstag der Anmeldung:
**15.08.84 Patentblatt 84/33**

(45) Bekanntmachung des Hinweises auf die Patenterteilung:
**13.08.86 Patentblatt 86/33**

(84) Benannte Vertragsstaaten:
**AT BE CH DE LI NL**

(56) Entgegenhaltungen:
**DE-C-2 725 954**
**FR-A-432 270**
**US-A-1 922 782**
**US-A-3 356 010**

(73) Patentinhaber: **petra- electric Peter Hohlfeldt GmbH & Co., D-8872 Burgau (DE)**

(72) Erfinder: **Der Erfinder hat auf seine Nennung verzichtet**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

LIBER, STOCKHOLM 1986

## Beschreibung

Die Erfindung betrifft ein Filtergefäß zur Aufnahme einer Filtertüte für die Herstellung von Aromaauszügen aus Kaffee oder Tee, wobei der Auslauf des konischen Filtergefäßes als Saugheber ausgebildet ist, der im wesentlichen aus zwei zueinander parallelen Kanälen besteht, die in ihrem oberen Bereich miteinander kommunizierend verbunden sind und deren einer im unteren Bereich des Filtergefäß-Innenraumes und deren anderer außerhalb des Filtergefäßes als Auslauföffnung endet.

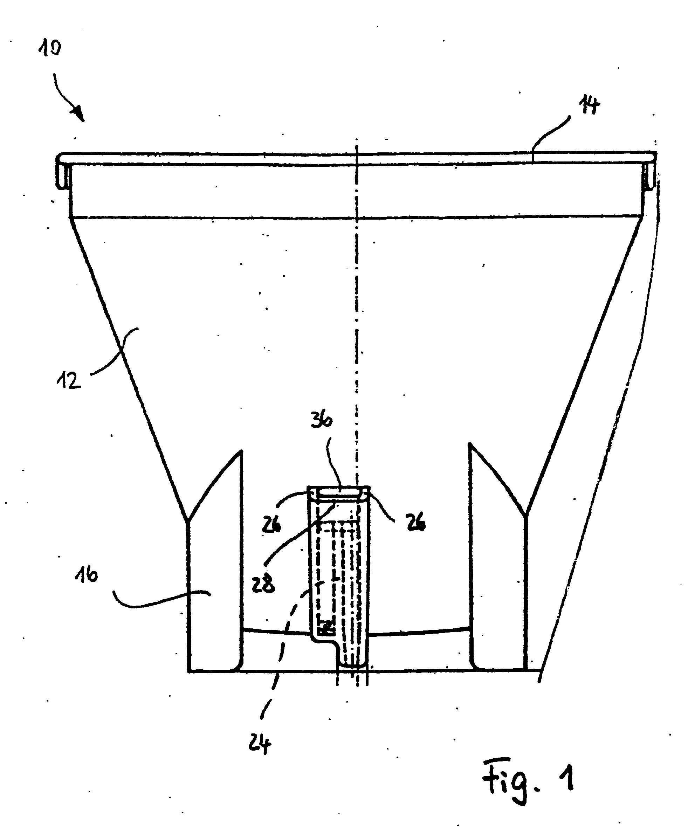

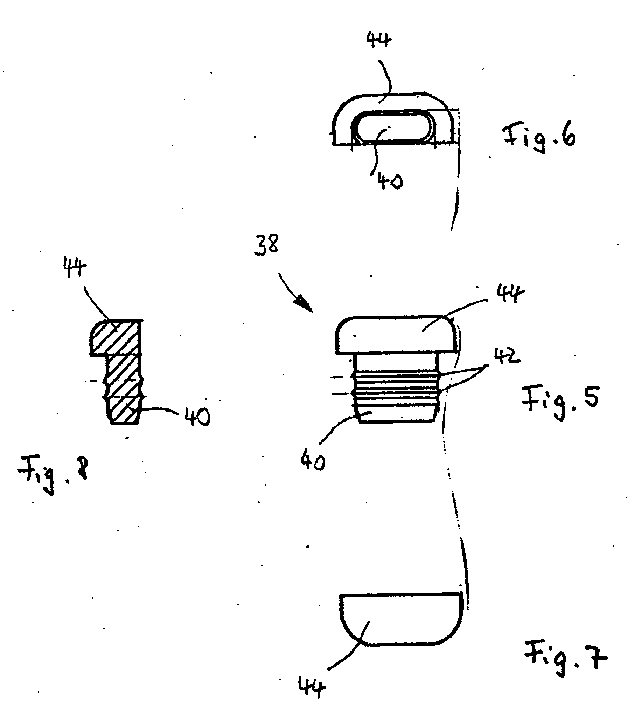

Aus der DE-B-27 25 854 ist bereits ein Filtergefäß mit Saugheber bekannt. Die dort abgebildeten Ausführungsbeispiele nach den Figuren 1 bis 4 weisen spezielle im unteren Teil des Filtergefäßes eingeformte bzw. eingesetzte U-förmige Kanäle auf, die den Nachteil aufweisen, daß sie leicht verstopfen und sehr schwer wieder zu reinigen sind. In dem Ausführungsbeispiel nach den Figuren 5 bis 7 sind diese Kanäle zum Innenraum des Filtergefäßes hin offen und werden erst durch die nasse auf den rippenartigen Vorsprüngen aufliegende Filtertüte geschlossen. Diese Ausbildung läßt zwar eine leichte Reinigung zu, erfordert jedoch eine einwandfreie Abdichtung durch die Filtertüte, die nicht immer gewährleistet ist.

Der vorliegenden Erfindung liegt die Aufgabe zugrunde, ein Filtergefäß der eingangs angesprochenen Art derart weiterzubilden, daß es im Betrieb sicher arbeitet und leicht zu reinigen ist.

Das erfindungsgemäße Filtergefäß zeichnet sich dadurch aus, daß der Saugheber mit seinen beiden Kanälen an die Außenwand des Filtergefäßes angeformt ist, wodurch die Kanäle für die Reinigung leicht zugänglich sind.

Eine bevorzugte Weiterbildung ist in Anspruch 2 angegeben. Durch den herausnehmbaren Stopfen wird die Reinigung der Kanäle von Kaffee- oder Teerückständen noch weiter erleichtert.

Die Erfindung ist nachstehend an einem Ausführungsbeispiel erläutert, das in der Zeichnung dargestellt ist.

Es zeigen:

Figur 1 eine Ansicht eines Filtergefäßes gemäß der Erfindung,

Figur 2 einen Vertikalschnitt des Filtergefäßes,

Figur 3 einen Vertikalschnitt in der Ebene A-B der Figur 2,

Figur 4 einen Vertikalschnitt in der Ebene A-C der Figur 2,

Figur 5 eine vergrößerte Darstellung des Stopfens,

Figur 6 eine Unteransicht des Stopfens,

Figur 7 eine Draufsicht des Stopfens und

Figur 8 einen Vertikalschnitt durch den Stopfen der Figur 5.

Die Figuren 1 bis 4 zeigen ein einstückig aus Kunststoff hergestelltes Filtergefäß 10, das einen konisch nach unten sich verjüngenden Hauptteil 12 aufweist. Der obere Rand ist als horizontal verlaufender Kragen 14 ausgebildet, mit dessen Hilfe das Filtergefäß 10 in eine bekannte Vorrichtung zur automatischen Zubereitung von Heißgetränken eingesetzt werden kann.

Am unteren Bereich des Filtergefäßes 10 ist eine im wesentlichen zylindrische Schürze 16 ausgebildet, die sich nach unten über den geschlossenen Boden 18 des Filtergefäßes 10 hinaus erstreckt.

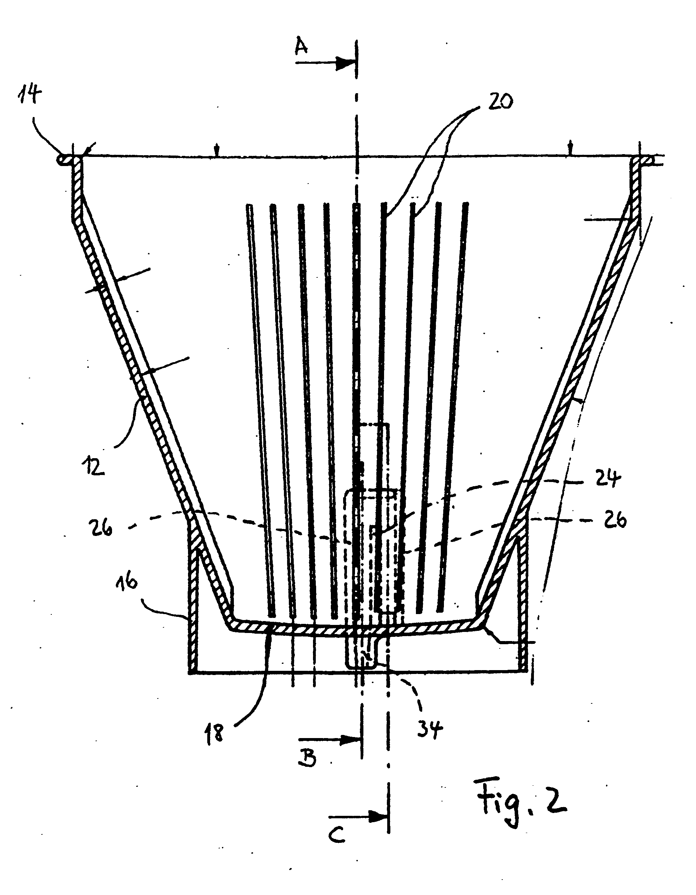

Die Figuren 2 bis 4 zeigen, daß an der Innenwand des Filtergefäßes 10 nach unten verlaufende Rippen 20 ausgebildet sind, an die sich die nicht gezeigte Filtertüte anlegt.

An die Außenwand des konischen Hauptteils 12 sind im letzten Drittel des Filtergefäßes 10 zwei parallele Kanäle 21 und 22 angeformt, die durch eine rippenartige Wand 24 voneinander getrennt sind. Sowohl diese Wand 24 als auch die beiden äußeren Kanalwände 26 sind einstückig mit dem Filtergefäß 10 ausgebildet. Die beiden Kanäle 21 und 22 sind durch eine Deckwand 28 nach außen abgeschlossen, welche die beiden Kanalwände 26 und die mittlere Wand 24 miteinander verbindet.

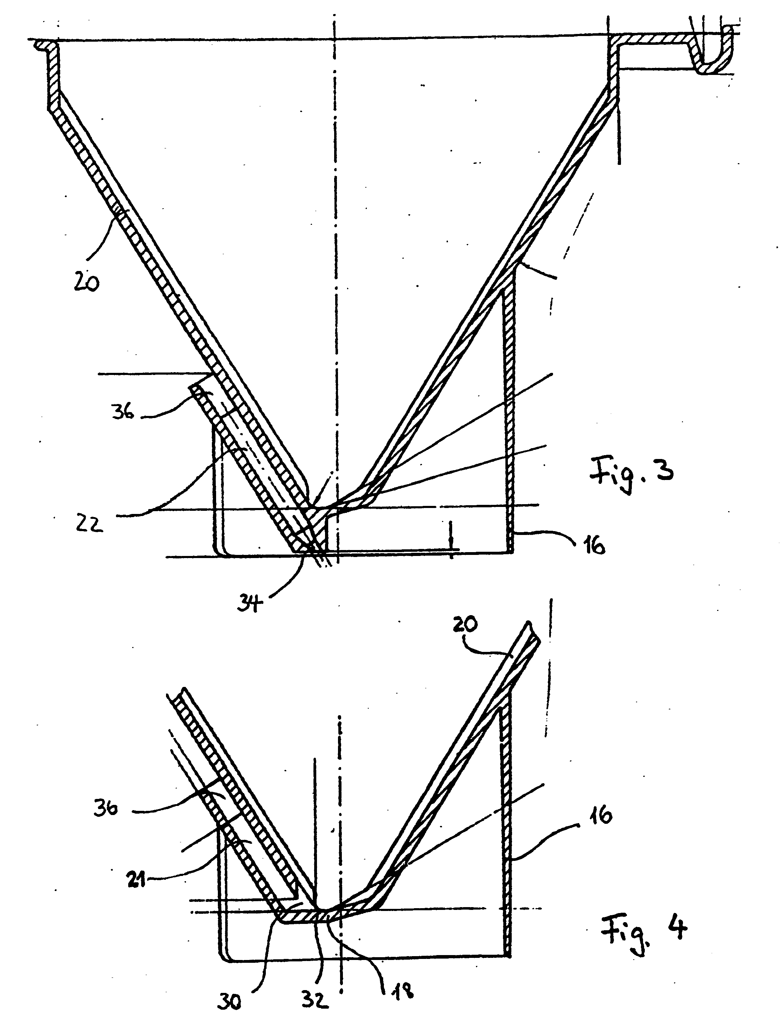

Wie Figur 4 zeigt, führt der erste Kanal 21 über eine Durchtrittsöffnung 30 zum tiefsten Punkt 32 im Innenraum des Filtergefäßes 10, während gemäß Figur 3 der zweite Kanal 22 zur Auslauföffnung 34 führt.

Der nach außen offene Übergangsbereich 36 zwischen den beiden Kanälen 21 und 22 kann durch einen herausnehmbaren Stopfen 38 abgeschlossen werden. Dieser Stopfen ist in den Figuren 5 bis 8 gezeigt und besteht vorzugsweise aus einem elastischen Material. Sein Schaft 40 hat eine dem Übergansbereich 36 angepaßte Form mit zwei ringförmig umlaufenden Dichtwulsten 42. Am oberen Ende geht der Schaft 40 in ein Deckelteil 44 über, dessen Unterseite bei eingesetztem Stopfen 38 am oberen Rand der den Übergangsbereich 36 abschließenden Kanalwände aufsitzt. Vorzugsweise steht er etwas über diese Wände seitlich hervor, so daß der Stopfen 38 leicht ergreiffen und abgezogen werden kann, beispielsweise bei Reinigungsarbeiten.

Selbstverständlich ist das Filtergefäß gemäß der Erfindung nicht an die Verwendung in einer Kaffeemaschine oder dergleichen beschränkt, sondern kann auch zum manuellen Zubereiten von Kaffee, Tee oder dergleichen verwendet werden. Die beiden Kanäle 21 und 22 bilden dabei zwei kommunizierende Röhren; sobald am Ende des Brühvorganges keine Flüssigkeit mehr vor der Druchtrittsöffnung 30 des ersten Kanals 21 ist, wird die Flüssigkeitszufuhr zum zweiten Kanal 22 unterbrochen, so daß von diesem Zeitpunkt an ein Nachtropfen von Flüssigkeit unterbunden wird.

## Patentansprüche

1. Filtergefäß zur Aufnahme einer Filtertüte für die Herstellung von Aromaauszügen aus Kaffee oder Tee, wobei der Auslauf des konischen Filtergefäßes (10) als Saugheber ausgebildet ist, der im wesentlichen aus zwei zueinander parallelen Kanälen (21, 22) besteht, die in ihrem oberen Bereich miteinander kommunizierend verbunden sind und deren einer im unteren Bereich des Filtergefäß-Innenraumes und deren anderer außerhalb des Filtergefäßes (10) als Auslauföffnung (34) endet, dadurch gekennzeichnet, daß zur Bildung der beiden Kanäle (21, 22) drei zueinander parallele, rippenartige Erhebungen (24, 26) einstückig an die Außenwand des Filtergefäßes (10) angeformt sind, welche die Kanalseitenwände bilden, daß die rippenartigen Erhebungen (24, 26) nach außen von einer Deckwand (28) abgeschlossen sind, die die Kanalaußenwände bildet, und daß der oben liegende Übergangsbereich zwischen den beiden Kanälen (21, 22) durch eine, eine Verbindungsöffnung zwischen den Kanälen (21, 22) freilassende Verbindungswand (38) geschlossen ist.

2. Filtergefäß nach Anspruch 1, dadurch gekennzeichnet, daß die Verbindungswand (38) zwischen den beiden Kanälen (21, 22) als abnehmbarer Stoppfen (38) ausbildet ist.

## Claims

1. Filter vessel for receiving a filter bag to produce aroma extracts from coffee or tea, the outflow of the conical filter vessel (10) being designed as a syphon consisting essentially of two parallel channels (21, 22) which are connected so as to communicate with one another in their upper region and of which one ends in the lower region of the filter-vessel interior and the other ends outside the filter vessel (10) as an outflow orifice (34), characterized in that, to form the two channels (21, 22), three parallel rib-like elevations (24, 26) are formed integrally on the outer wall of the filter vessel (10) and constitute the channel side walls, in that the rib-like elevations (24, 26) are closed off towards the outside by a covering wall (28) which forms the channel outer walls, and in that the upper region of transition between the two channels (21, 22) is closed by a connecting wall (38) which leaves a connecting orifice free between the channels (21, 22).

2. Filter vessel according to Claim 1, characterized in that the connecting wall (38) between the two channels (21,22) is designed as a removable stopper (38).

## Revendications

1. Récipient de filtration prévu pour recevoir un cornet de filtrage pour la préparation d'infusions aromatisées de café ou de thé, la sortie du récipient de filtration conique (10) étant réalisée sous la forme d'un siphon qui est constitué essentiellement de deux canaux mutuellement parallèles (21, 22) qui sont reliés de manière mutuellement communicante dans leur zone supérieure et dont l'un se termine dans la zone inférieure de l'espace interne du récipient de filtration et dont l'autre se termine à l'extérieur du récipient de filtration (10) sous la forme d'un orifice de sortie (34), caractérisé en ce que, pour la formation des deux canaux (21, 22) trois saillies en forme de nervures (24, 26) mutuellement parallèles sont agencées d'une pièce sur la paroi externe du récipient de filtration (10), ces saillies formant les parois latérales des canaux, en ce que les saillies en forme de nervures (24, 26) sont fermées vis-à-vis de l'extérieur par une paroi de recouvrement (28) qui forme les parois externes des canaux, et en ce que la zone de transition située en haut entre les deux canaux (21, 22) est fermée par une paroi de liaison (38) qui laisse libre une ouverture de communication entre les canaux (21, 22).

2. Récipient de filtration suivant la revendication 1, caractérisé en ce que la paroi de liaison (38) entre les deux canaux (21, 22) est façonnée sous la forme d'un bouchon détachable (38).

Fig. 1

Fig. 2

Fig. 3

Fig. 4

44

Fig. 6

40

38

44

44

42

Fig. 5

40

40

Fig. 8

44

Fig. 7